# EUROPEAN PATENT APPLICATION

(11) **EP 2 487 915 A1**
(43) Date of publication of application: **15.08.2012**
(21) Application number: 12000953.5
(22) Date of filing: 14.02.2012
(51) Int. Cl.: H04N 13/00

(54) **3d format conversion systems and methods**

(30) Priority: 14.02.2011 US 201161442450 P
(71) Applicant: HTC Corporation, Taoyuan County 330 (TW)
(72) Inventor: Chen, Li-Cheng, Taoyuan City Taoyuan County 330 (TW); Wu, Jenn-Wein, Taoyuan City Taoyuan County 330 (TW); Chueh, Hsin-Ti, Taoyuan City Taoyuan County 330 (TW)
(74) Representative: Klang, Alexander H.

(57) **Abstract**

3D format conversion systems and methods are provided. The 3D format conversion system includes a 3D panel supporting at least one 3D display format, a frame buffer, and a graphics processing unit including a plurality of shaders for parallel processing image data. The graphics processing unit obtains a 3D source using texture streaming, converts the 3D source into the 3D display format supported by the 3D panel using the shaders, and outputs the converted 3D source to the frame buffer. The 3D panel obtains and displays the converted 3D source from the frame buffer.

## Description

### CROSS REFERENCE TO RELATED APPLICATIONS

This Application claims priority of U.S. Provision Application No. 61/442,450, filed on February 14, 2011, the entirety of which is incorporated by reference herein.

### BACKGROUND OF THE INVENTION

### Field of the Invention

The disclosure relates generally to 3D format conversion systems and methods, and, more particularly to system and methods that perform the 3D format conversion using shaders of a graphics processing unit of an electronic device.

### Description of the Related Art

Recently, the 3D content industry has grown due to application and growth in multimedia systems, computer gaming, 3D TV broadcasting systems, and others. For 3D content, playback devices having 3D playback capability have been accordingly designed.

Currently, there are many kinds of a 3D display sources and formats in current use. When a 3D panel wants to display a 3D source, the 3D source will be dynamically converted to a specific 3D display format which is supported by the 3D panel. Accordingly, there is a need to design and set up a new module or a display chipset on the 3D panel for converting 3D sources from one format to a suitable format which is supported by the 3D panel. However, it is understood that, considering chipset complexity, and design time and cost, the number of supported 3D display formats will be limited.

### BRIEF SUMMARY OF THE INVENTION

3D format conversion systems and methods are provided.

An embodiment of a 3D format conversion system includes a 3D panel supporting at least one 3D display format, a frame buffer, and a graphics processing unit including a plurality of shaders for parallel processing image data. The graphics processing unit obtains a 3D source using texture streaming, converts the 3D source into the 3D display format supported by the 3D panel using the shaders, and outputs the converted 3D source to the frame buffer. The 3D panel obtains and displays the converted 3D source from the frame buffer.

In an embodiment of a 3D format conversion method for use in an electronic device including a graphics processing unit having a plurality of shaders for parallel processing image data, a 3D source is obtained by the graphics processing unit using texture streaming. The 3D source is converted into a 3D display format supported by a 3D panel using the shaders, and the converted 3D source is output to a frame buffer. Then, the 3D panel obtains and displays the converted 3D source from the frame buffer.

In some embodiments, the shader runs by referencing a shader program coding a conversion rule between a type of the 3D source and the 3D display format supported by the 3D panel. In some embodiments, the shader comprises a vertex shader and a pixel shader. Vertices of a plane of a full resolution of a screen of an electronic device are input to the vertex shader, and the vertex shader performs a 3D to 2D coordinate transformation for each vertex. The pixel shader performs a texture lookup operation for each pixel of the vertices according to the conversion rule. In some embodiments, in the texture lookup operation, the pixel shader repeatedly locates one of the pixels in the plane, and references the 3D source to find a pixel value, thus to generate at least one complete frame conforming to the 3D display format.

In some embodiments, the 3D display format is designated via an interface. In some embodiments, the graphics processing unit can automatically determine the 3D display format based on a signal transmitted from the 3D panel. In some embodiments, the system further comprises a storage unit comprising a database or a table recording a mapping relationship between the 3D panel and the 3D display format. The graphics processing unit determines the 3D display format based on the signal and the mapping relationship.

In some embodiments, the graphics processing unit obtains a type of the 3D source from a header of the 3D source.

3D format conversion methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a 3D format conversion system of the invention;

Figs. 2A∼2C are schematic diagrams illustrating examples of a 3D source type of the invention;

Figs. 3A∼3D are schematic diagrams illustrating examples of a 3D display format of the invention;

Fig. 4 is a flowchart of an embodiment of a 3D format conversion method of the invention; and

Fig. 5 is a flowchart of an embodiment of a method for converting a 3D source using shaders of the invention.

### DETAILED DESCRIPTION OF THE INVENTION

3D format conversion systems and methods are provided.

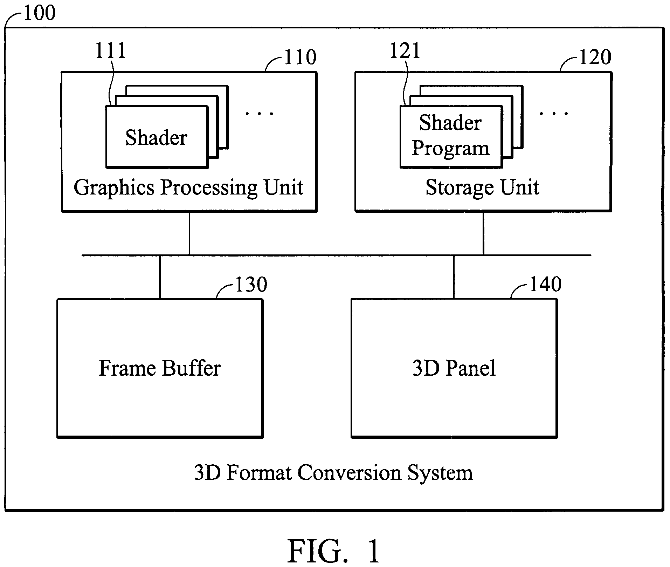

Fig. 1 is a schematic diagram illustrating an embodiment of a 3D format conversion system of the invention. The 3D format conversion system can be used in an electronic device having 3D display capability, such as a computer or a portable device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

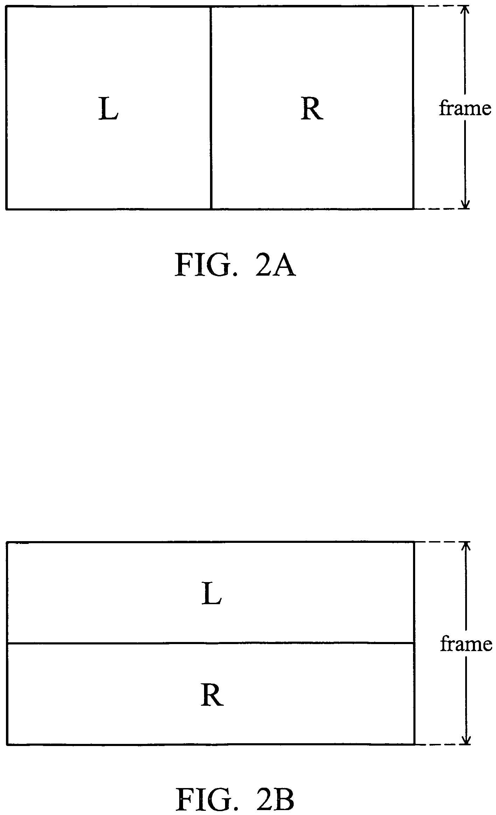

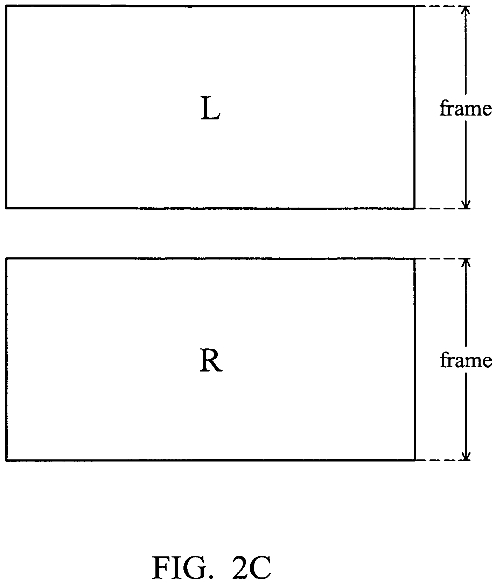

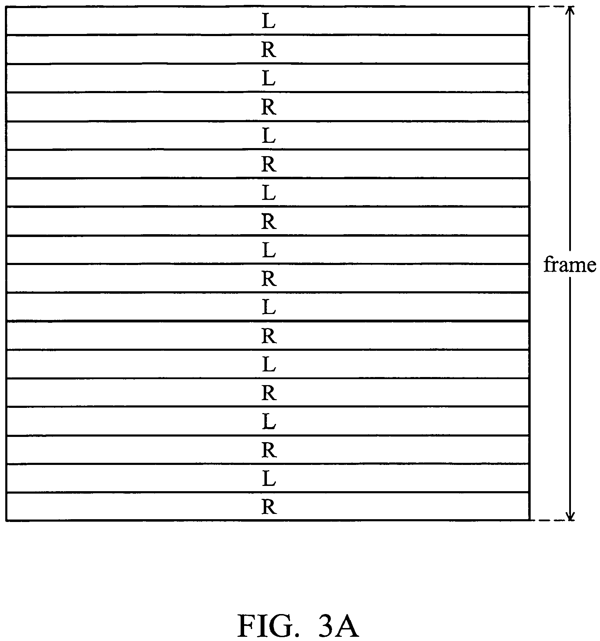

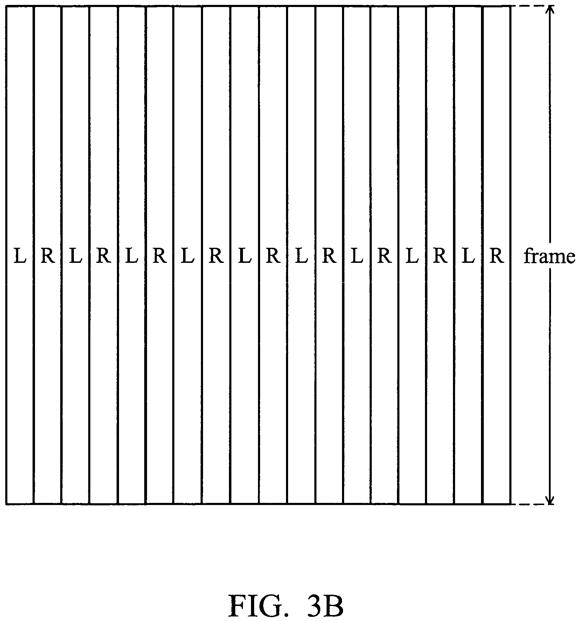

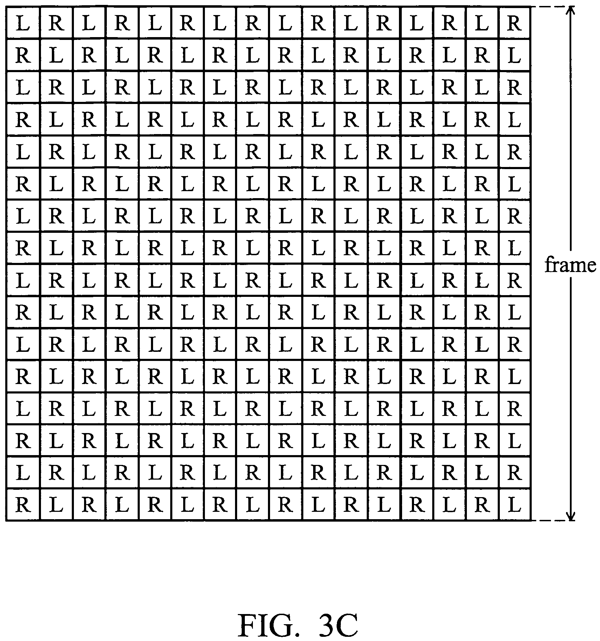

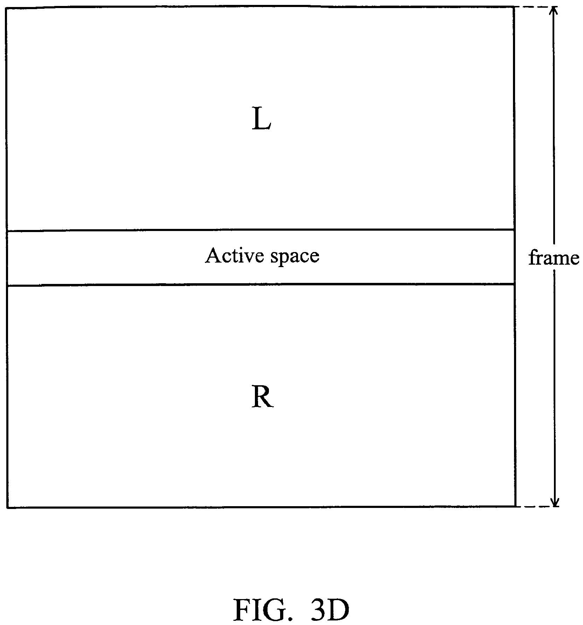

The 3D format conversion system 100 comprises a graphics processing unit (GPU) 110, a storage unit 120, a frame buffer 130, and a 3D panel 140. Generally, the GPU 110 is dedicated for image data processing. The GPU 110 comprises a plurality of shaders 111 for parallel processing image data. The shaders 111 comprise vertex shaders and pixel shaders. It is understood that, the GPU is a pipeline machine. In the GPU, image data is first processed by a vertex shader in the vertex level, and then, the image data is processed by a pixel shader in the pixel level. In the vertex shader, each 3D position of the vertex in virtual space is transformed to the 2D coordinate at which it appears on the screen (as well as a depth value for the Z-buffer). Vertex shaders can manipulate properties such as position, color, and texture coordinate, but cannot create new vertices. Next, the output of the vertex shader goes to the next stage in the pipeline, which is either a geometry shader if present or the rasterizer otherwise. In the pixel shader, the color of individual pixels is calculated. The input to this stage comes from the rasterizer, which fills in the polygons being sent through the graphics pipeline. Pixel shaders are typically used for scene lighting and related effects such as bump mapping and color toning. In the present disclosure, however, the GPU 110 can be used to perform 3D format conversion. Specifically, the GPU 110 can obtain 3D sources, and the shaders 111 of the GPU 110 can be used to perform the 3D format conversion for the 3D sources. Generally, a unit of the 3D source is a combination of a left image and a right image, and the left image and the right image can be used to generate a 3D image/scene. In some embodiments, the 3D source type, that is the combination situation of the left image and the right image can be recorded in a header of the 3D source. In some embodiments, the 3D source type may be Side by Side (Full or Half), Top-and-bottom (Full or Half), and Frame interleaved, as shown in Figs. 2A∼2C. It is noted that, the above 3D display formats are examples of the present disclosure, and are not limited thereto. For example, the Pixel interlaced type may be also used in the present invention. Related details of 3D format conversion will be discussed further in the following paragraphs. The storage unit 120 comprises a plurality of shader programs 121. It is understood that, the shaders 111 in the GPU 110 are programmable. That is, the shader 111 runs by referencing a shader program 121 in the storage unit 120. In the present disclosure, one shader program 121 can be coded for a conversion rule between a 3D source type and a 3D display format. The 3D format conversion mechanism of the present disclosure is flexible since the shader programs 121 can be expanded at will. The frame buffer 130 is a video output device that drives a video display from a memory buffer containing a complete frame of data. In other words, the frame buffer 130 can store image data, such as pixel values to be rendered on the screen. The 3D panel 140 can display 3D contents. It is understood that, in some embodiments, at least one 3D display format can be supported by the 3D panel 140. For example, the 3D display format may comprise a line interleaved format, a column interleaved format, a quincunx interleaved format, and a frame packed format, as respectively shown in Figs. 3A∼3D.

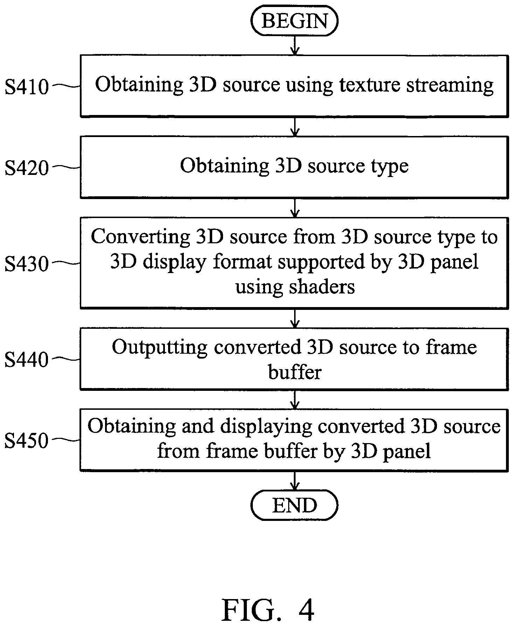

Fig. 4 is a flowchart of an embodiment of a 3D format conversion method of the invention. The 3D format conversion method can be used in an electronic device having 3D display capability, such as a computer or a portable device, such as a PDA, a smart phone, a mobile phone, an MID, a laptop computer, a car computer, a digital camera, a multi-media player, a game device, or any other type of mobile computational device, however, it is to be understood that the invention is not limited thereto.

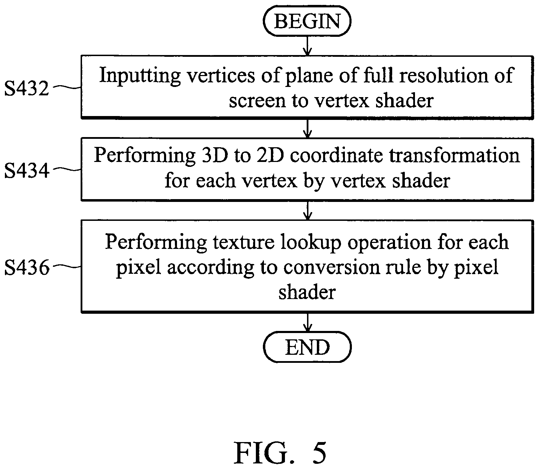

In step S410, a 3D source is treated as texture and provided to an GPU using texture streaming. In step S420, the type of the 3D source is obtained. It is understood that, in some embodiments, the 3D source type can be obtained by analyzing the content structure of the 3D source. In some embodiments, the 3D source type can be obtained from a header of the 3D source. In step S430, the 3D source is converted from the 3D source type to a 3D display format supported by a 3D panel using the shaders in the GPU. It is understood that, in some embodiments, the 3D display format supported by the 3D panel can be designated via an interface. In some embodiments, the GPU can automatically determine the 3D display format based on a signal transmitted from the 3D panel. In some embodiments, the storage unit 120 can further comprise a database or a table recording a mapping relationship between the 3D panel and the 3D display format. The GPU can determine the 3D display format based on the signal and the mapping relationship. That is, the GPU can determine the 3D panel based on the signal, and determine the 3D display format based on the determined 3D panel and the mapping relationship. As described, the shader runs by referencing a shader program, wherein the shader program is coded for a conversion rule between a 3D source type and a 3D display format. When the 3D source type and the 3D display format are determined, a specific shader program can be selected for the shaders, and the shaders can run based on the specific shader program. Fig. 5 is a flowchart of an embodiment of a method for converting a 3D source using shaders of the invention. It is noted that, the shaders comprise vertex shaders and pixel shaders. First, in step S432, a plane of full size/resolution of a screen of the electronic device is generated, and vertices of the plane are input to the vertex shader. In step S434, the vertex shader performs a 3D to 2D coordinate transformation for each vertex, and then outputs the results to the pixel shader. Then, in step S436, the pixel shader performs a texture lookup operation for each pixel of the vertices according to the conversion rule recorded in the shader program. It is understood that, in some embodiments, in the texture lookup operation, since the pixel shader knows the conversion rule for the 3D source type and the 3D display format from the shader program, the pixel shader repeatedly locates one of the pixels in the plane, and refers the 3D source to find a pixel value, such as color for the pixel, to generate at least one complete frame conforming to the 3D display format. As described, in some embodiments, the 3D display format can be automatically selected based on a signal transmitted from the 3D display panel. In some embodiments, if the 3D source type and the 3D display format are the same, the 3D source can be directly forwarded to the 3D display panel for display. In some embodiments, if the CPU of the electronic device supports the process/conversion of the 3D source type, the use of the GPU can be omitted, and the processed 3D source can be transmitted from the CPU to the 3D panel for display. After the converted 3D source is generated, in step S440, the converted 3D source is output to a frame buffer, and in step S40, the 3D panel obtains and displays the converted 3D source from the frame buffer.

Therefore, the 3D format conversion systems and methods can perform the 3D format conversion using the shaders of GPU in the electronic device. Since the GPU is hardware already available and is programmable, the 3D format conversion can be done without redesigning and replacing any hardware, and be flexible and extendable.

3D format conversion methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A 3D format conversion system, comprising:
a 3D panel supporting at least one 3D display format;
a frame buffer; and
a graphics processing unit comprising a plurality of shaders for parallel
processing image data, obtaining a 3D source using texture streaming, converting the 3D source into the 3D display format supported by the 3D panel using the shaders, and outputting the converted 3D source to the frame buffer,
wherein the 3D panel obtains and displays the converted 3D source from the
frame buffer.

2. The system of claim 1, wherein the shader runs by referencing a shader program coding a conversion rule between a type of the 3D source and the 3D display format supported by the 3D panel.

3. The system of claim 2, wherein the shader comprises a vertex shader and a pixel shader, vertices of a plane of a full resolution of a screen of an electronic device are input to the vertex shader, and the vertex shader performs a 3D to 2D coordinate transformation for each vertex, and the pixel shader performs a texture lookup operation for each pixel of the vertices according to the conversion rule, wherein preferably, in the texture lookup operation, the pixel shader repeatedly locates one of the pixels in the plane, and references the 3D source to find a pixel value, thus to generate at least one complete frame conforming to the 3D display format.

4. The system of claim 1, wherein the 3D display format comprises a line interleaved format, a column interleaved format, a quincunx interleaved format, or a frame packed format.

5. The system of claim 1, wherein the 3D display format is designated via an interface.

6. The system of claim 1, wherein the graphics processing unit further automatically determines the 3D display format based on a signal transmitted from the 3D panel, the system preferably further comprising a storage unit comprising a database or a table recording a mapping relationship between the 3D panel and the 3D display format, and the graphics processing unit determines the 3D display format based on the signal and the mapping relationship.

7. The system of claim 1, wherein the graphics processing unit further obtains a type of the 3D source from a header of the 3D source.

8. A 3D format conversion method for use in an electronic device comprising a graphics processing unit comprising a plurality of shaders for parallel processing image data, comprising:
obtaining a 3D source using texture streaming by the graphics processing unit;
converting the 3D source into a 3D display format supported by a 3D panel
using the shaders; and
outputting the converted 3D source to a frame buffer,
wherein the 3D panel obtains and displays the converted 3D source from the
frame buffer.

9. The method of claim 8, wherein the step of converting the 3D source into a 3D display format supported by a 3D panel is performed by referencing a shader program coding a conversion rule between a type of the 3D source and the 3D display format supported by the 3D panel by the shader.

10. The method of claim 9, wherein the shader comprises a vertex shader and a pixel shader, and the method further comprises the steps of:
inputting vertices of a plane of a full resolution of a screen of the electronic
device to the vertex shader;
performing a 3D to 2D coordinate transformation for each vertex by the vertex
shader; and
performing a texture lookup operation for each pixel of the vertices according
to the conversion rule by the pixel shader,
wherein preferably, in the texture lookup operation, the pixel shader repeatedly locates one of the pixels in the plane, and references the 3D source to find a pixel value, thus to generate at least one complete frame conforming to the 3D display format.

11. The method of claim 8, wherein the 3D display format comprises a line interleaved format, a column interleaved format, a quincunx interleaved format, or a frame packed format.

12. The method of claim 8, further comprising receiving a designation of the 3D display format via an interface.

13. The method of claim 8, further comprising automatically determining the 3D display format based on a signal transmitted from the 3D panel.

14. The method of claim 13, further comprising:
providing a database or a table recording a mapping relationship between the
3D panel and the 3D display format; and
determining the 3D display format based on the signal and the mapping
relationship.

15. The method of claim 8, further comprising obtaining a type of the 3D source from a header of the 3D source.
